# FASCICULE DE BREVET EUROPEEN

(11) **EP 1 351 832 B1**
(45) Date de publication et mention de la délivrance du brevet: **18.05.2005**
(21) Numéro de dépôt: 01984877.9
(22) Date de dépôt: 20.12.2001
(51) Int. Cl.: B60C 25/135

(54) **PROCEDE DE MONTAGE D'UN PNEUMATIQUE SUR UNE JANTE**
VERFAHREN ZUR MONTAGE EINES REIFENS AUF EINER FELGE
METHOD FOR MOUNTING A TYRE ON A RIM

(30) Priorité: 11.01.2001 FR 0100498
(43) Date de publication de la demande: 15.10.2003
(73) Titulaire: Société de Technologie Michelin, 63000 Clermont-Ferrand Cedex 09 (FR); Michelin Recherche et Technique S.A., 1763 Granges-Paccot (CH)
(72) Inventeur: ABINAL, Richard, F-63960 Veyre-Monton (FR)
(74) Mandataire: Dequire, Philippe
(86) Numéro de dépôt international: PCT/EP2001/015166
(87) Numéro de publication internationale: WO 2002/055325

(56) Documents cités:
- EP-A- 1 048 496
- FR-A- 2 699 121
- FR-A- 2 720 977

## Description

La présente invention concerne un procédé de montage d'un ensemble formé par un pneumatique et d'un appui de soutien de bande de roulement amovible, et plus particulièrement d'un ensemble destiné à être monté sur une jante monobloc dont au moins un des sièges est incliné vers l'extérieur.

Comme décrite dans les brevets français FR 2 699 121, FR 2 713 557 et FR 2 713 558, une telle jante a, vue en section méridienne, un premier siège dont l'extrémité axialement extérieure est sur un cercle de diamètre inférieur au diamètre du cercle sur lequel se trouve l'extrémité axialement intérieure (un tel siège est dit incliné vers l'extérieur), une portée plus ou moins grande destinée à recevoir un anneau de soutien de bande de roulement amovible, éventuellement une gorge de montage, et un deuxième siège de jante, soit identique, soit différent du premier siège de jante. Cette jante forme avec un pneumatique dont le profil méridien d'armature de carcasse et dont la forme des bourrelets sont adaptés et avec un appui de soutien amovible un ensemble roulant performant dans le cas d'un roulage à faible pression ou même à pression nulle.

Le brevet FR 2 720 977 décrit un procédé de montage sur une telle jante monobloc d'un pneumatique comprenant un premier bourrelet et un deuxième bourrelet qui seront montés respectivement sur le premier et le deuxième siège de jante et d'un appui de soutien, amovible. Le procédé de montage est tel que :
(a) on introduit, dans une première étape, l'appui dans le pneumatique ;
(b) on présente sur la jante le deuxième bourrelet et l'appui de soutien, du côté opposé au deuxième siège de jante, jusqu'à les introduire sur la portée ;
(c) on achève d'enfiler l'appui sur la portée et on monte sur le premier siège de jante le premier bourrelet ; et
(d) on monte le deuxième bourrelet sur le deuxième siège de jante.

Le document EP 1 048 496 A1 décrit un dispositif de mise en oeuvre de ce procédé de montage dans lequel le premier bourrelet et l'appui de soutien sont simultanément enfilés sur la jante par application progressive d'un effort axial contre le premier bourrelet du pneumatique, lui-même étant en appui contre la paroi adjacente de l'appui de soutien. L'outil d'application de l'effort axial est un galet libre en rotation et cette mise en place s'effectue pendant une rotation de la jante qui entraîne en rotation le pneumatique et l'appui.

Ce procédé est efficace dans le cas d'appuis de soutien qui, dans l'état enfilé sur la portée de la jante, sont en contact avec le premier bourrelet du pneumatique ou très proches de celui-ci.

Le document FR99/10108 présente des jantes similaires adaptée pour recevoir des appuis de soutien de la bande de roulement du pneumatique allégés. A l'état monté, ces appuis de soutien sont éloignés de la paroi intérieure du bourrelet du pneumatique d'une distance notable, de l'ordre d'une dizaine de centimètres par exemple. Dans le cas du montage d'ensembles pneumatique-appui sur de telles jantes, on observe que le bourrelet a du mal à suivre le mouvement de l'appui pendant la mise en place de l'appui de soutien sur la portée adaptée de la jante.

Le premier bourrelet peut perdre le contact avec le galet presseur radialement extérieurement. Dans ce cas, le bourrelet peut venir en contact avec le sommet de l'appui de soutien et il y a un risque de pollution dû au lubrifiant utilisé pour faciliter le roulage en appui.

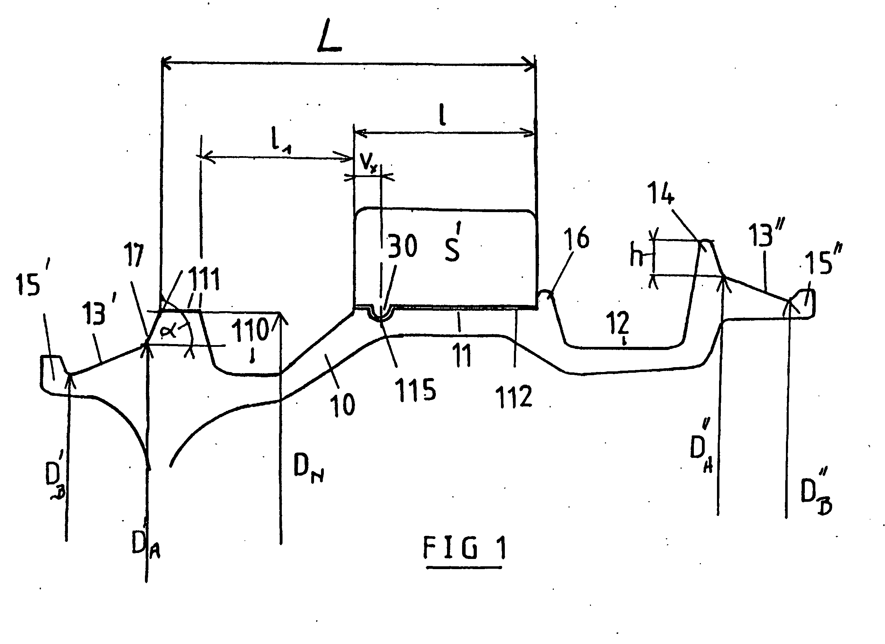

Comme ces jantes comportent usuellement une gorge circonférentielle adjacente au premier siège de jante (voir figure 1), le premier bourrelet peut aussi s'introduire dans cette gorge circonférentielle pendant la mise en place de l'appui sur la portée de la jante. On a alors beaucoup de difficultés pour le ressortir de cette position.

Lorsque le bourrelet reste positionné entre l'appui et le galet presseur, l'amplitude du déplacement nécessaire pour la mise en place de l'appui impose au pneumatique de fortes flexions qui peuvent lui être dommageable.

Enfin, dans tous les cas, un doute subsiste à propos de la mise en place correcte de l'appui ou non.

L'invention a pour objet un procédé de montage sur une jante monobloc J, comprenant un premier siège de jante, incliné vers l'extérieur, prolongé axialement à l'extérieur par une saillie de faible hauteur et réuni axialement à l'intérieur à une portée destinée à recevoir un appui de soutien S de bande de roulement, et un second siège de jante, incliné vers l'extérieur, dont l'extrémité axialement intérieure est sur un cercle de diamètre supérieur au diamètre du cercle sur lequel se trouve l'extrémité axialement intérieure du premier siège de jante, d'un pneumatique P comprenant un premier bourrelet et un deuxième bourrelet qui seront montés respectivement sur le premier et le deuxième sièges de jante et d'un appui de soutien S, amovible, dans lequel :
(a) on introduit, dans une première étape, ledit appui S dans le pneumatique P ;
(b) on présente sur la jante J le deuxième bourrelet et l'appui de soutien S, du côté opposé au deuxième siège de jante, jusqu'à les introduire sur ladite portée ;
(c) on achève d'enfiler ledit appui S sur la portée et on monte sur le premier siège de jante le premier bourrelet ; et
(d) on monte le deuxième bourrelet sur le deuxième siège de jante ;
caractérisé en ce que, avant d'achever d'enfiler ledit appui S sur la portée, on saisit ledit premier bourrelet en un point donné et on déplace radialement extérieurement ledit point pour écarter radialement en ce point ledit premier bourrelet dudit appui S, on met en place ledit appui S sur ladite portée et après avoir achevé ladite mise en place dudit appui S, on libère ledit bourrelet.

Le fait d'écarter radialement extérieurement le bourrelet pendant la mise en place de l'appui de soutien permet de mieux maîtriser les conditions de mise en place de l'appui. En particulier, cela a l'avantage d'éviter un contact entre le premier bourrelet et le sommet de l'appui de soutien.

Avantageusement, on achève d'enfiler l'appui S par poussée directe d'un outil d'application contre la paroi de l'appui S disposée du côté dudit premier bourrelet tout en mettant en rotation la jante.

Préférentiellement, on enfile l'appui S sur la portée de la jante J jusqu'au contact entre une butée de l'outil d'application et la saillie extérieure du premier siège de la jante J.

Cela a l'avantage de définir précisément l'amplitude maximale du déplacement axial de l'outil d'application.

Après avoir mis en place l'appui sur sa portée, on libère le premier bourrelet et on poursuit usuellement le montage des deux bourrelets sur leurs sièges de jante.

Dans le cas où la jante a une gorge de montage disposée entre le second siège et la portée d'appui, et le second bourrelet ayant été introduit lors de l'étape (b) dans cette gorge de montage, après avoir achevé d'enfiler l'appui de soutien sur la portée de la jante et avant de libérer le premier bourrelet, on déplace axialement extérieurement le premier bourrelet pour exercer sur le second bourrelet une traction, créer un espace local entre le second bourrelet et la paroi adjacente au second siège de la gorge de montage et on introduit un levier de montage dans cet espace dégagé entre le second bourrelet et ladite paroi adjacente au second siège de la gorge de montage.

L'insertion de ce levier de montage permet de sortir le second bourrelet de la gorge de montage pour l'amener à l'extérieur de la jante du côté du second siège 13", préalable à son montage sur ce second siège.

L'invention a aussi pour objet un outil de mise en place des bourrelets d'un pneumatique et d'un appui de soutien S sur une jante monobloc J caractérisé en ce qu'il comporte :
- un support de forme allongée d'axe A ;
- un doigt s'étendant à partir du support dans une direction B perpendiculaire à A ; et
- un moyen de transmission d'un effort d'application à partir du support à une zone C disposée relativement audit support dans la direction B au-delà du doigt et décalée relativement audit doigt parallèlement à l'axe A.

Le moyen de transmission d'un effort d'application peut être un patin ou un galet presseur libre en rotation. Ce galet peut avoir son axe de rotation A' parallèle à l'axe A. Le galet peut être directement fixé au doigt.

Avantageusement, l'outil comporte une butée disposée dans la direction B relativement au support et décalée relativement au doigt dans la direction A au-delà du moyen de transmission d'un effort.

Cette butée peut être un galet libre en rotation et d'axe de rotation coaxial ou parallèle à A.

L'invention est illustrée par le dessin annexé dans lequel :
- la figure 1 représente schématiquement, vu en section méridienne, un ensemble appui de soutien et jante tel que divulgué dans la demande FR99/10108 ;
- la figure 2 représente, en vue de côté, un outil selon l'invention ;
- la figure 3 présente, en vue de côté, une variante d'outil selon l'invention ;
- les figures 4 à 13 illustrent schématiquement les différentes phases de l'étape selon l'invention du procédé de montage de l'ensemble pneumatique-appui sur une jante similaire à celle de la figure 1 ; et
- la figure 14 représente schématiquement, vu en section méridienne, un second ensemble appui de soutien et jante, sans gorge de montage, tel que divulgué dans la demande FR99/10108.

Sur la figure 1 est montrée, vue en section méridienne, une jante monobloc 10 telle que divulguée dans la demande FR 99/10108. Cette jante peut former avec un disque une roue monobloc. Le disque peut aussi être fabriqué indépendamment de la jante et réuni à celle-ci par la suite. La jante 10 comprend deux sièges de jante tronconiques 13' et 13" de diamètres inégaux respectivement D'_{A} et D"_{A}. Il faut entendre par diamètre d'un siège tronconique le diamètre de son extrémité circulaire la plus grande. Les génératrices des deux sièges 13' et 13" sont inclinées vers l'extérieur, les diamètres D'_{A} et D"_{A} respectivement de leurs extrémités axialement intérieures étant plus grands que les diamètres D'_{B} et D"_{B} de leurs extrémités axialement extérieures. Les deux sièges tronconiques sont prolongés axialement vers l'extérieur par deux saillies ou humps 15' et 15" de faible hauteur. Le premier siège 13', destiné à être monté du côté extérieur du véhicule qui sera équipé de tels ensembles, est axialement à l'intérieur prolongé par une partie tronconique 17 inclinée d'un angle α relativement à la direction axiale. L'extrémité axialement intérieure de la partie tronconique 17 est aussi extrémité de la portée de jante 11, située axialement du côté extérieur du véhicule. Ladite portée est constituée de deux zones d'appui 111 et 112 séparées par une rainure circonférentielle 110. Le diamètre de la portée 11 est D_{N}. La zone d'appui 112, la plus proche axialement du deuxième siège de jante 13" destiné à être monté du côté intérieur du véhicule, a son extrémité la plus proche dudit siège 13" pourvue d'une saillie ou butée de positionnement 16, destinée à éviter le déplacement axial vers l'intérieur de l'appui de soutien S de bande de roulement qui sera disposé sur la portée de jante 11. Le deuxième siège 13" est prolongé axialement vers l'intérieur par un rebord 14 de faible hauteur h (de l'ordre de 3 à 4 mm). Ce rebord 14 délimite avec la butée de positionnement 16 une gorge de montage 12 pour la mise en place du bourrelet de pneumatique qui sera monté sur le siège 13".

L'appui S en matière caoutchouteuse possède une largeur axiale 1 très nettement inférieure à la largeur axiale L de la portée 11, puisque égale dans l'exemple considéré à 0,5 L. La largeur 1 de l'appui de soutien S doit en particulier être, dans le cas de la présence de la rainure circonférentielle 110, supérieure à la largeur l₁ de ladite rainure. Compte tenu de la largeur axiale réduite de l'appui S, la première partie 112 de la portée 11 n'est utile que pour le montage et le démontage de l'appui.

La portée 11 est pourvue sur la face radialement supérieure de la zone d'appui 112 d'une rainure circonférentielle 115 se présentant, vue en section méridienne, sous forme d'un demi-cercle de faible rayon de l'ordre de 4,5 mm, c'est-à-dire sensiblement de même valeur que la hauteur d'une saillie 15'(15"). La paroi radialement intérieure de l'appui de soutien S est pourvue d'une protubérance 30, de préférence circonférentielle, destinée à coopérer avec la rainure 110 de la portée d'appui 112 pour éviter tout déplacement axial vers le premier siège 13' de l'appui en service. La protubérance 30 est constituée de la même matière caoutchouteuse que celle de l'appui et peut être renforcée ou non. Dans le cas où elle est renforcée, elle le sera préférentiellement par un fil élastique continu circonférentiellement ou un toron continu de plusieurs fils élastiques, c'est-à-dire présentant un certain allongement sous contrainte d'élongation et retrouvant sa forme initiale dès disparition de la contrainte. La protubérance 30 est préférentiellement située axialement entre l'extrémité de la face radialement intérieure dudit appui S axialement la plus proche du siège 13' et le milieu de ladite face. La distance axiale Vₓ séparant l'axe moyen de la protubérance 30, qui est aussi axe moyen de la rainure 110, de l'extrémité de la zone d'appui 112 située du côté extérieur du véhicule, est comprise entre 0,1 et 0,2 fois la largeur axiale 1 de l'appui S, d'une part pour avoir un meilleur centrage de l'appui sur la zone 112 et d'autre part pour minimiser la longueur déplacement sous effort de compression de la protubérance de l'appui, bien que l'élasticité circonférentielle de la protubérance 30 permette un enfilage facile de l'appui sur la portée 11.

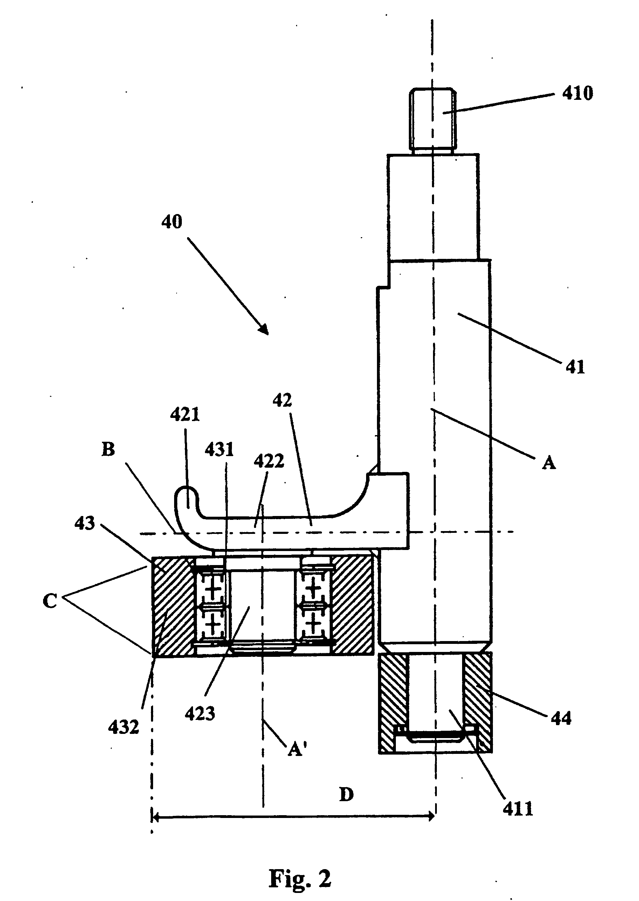

La figure 2 présente en vue de côté un outil selon l'invention. Cet outil 40 de mise en place de bourrelets de pneumatiques ainsi que d'appui de soutien de bande de roulement comprend un support 41 de forme allongée et de section sensiblement cylindrique d'axe A, un doigt 42, un galet presseur 43 et une butée 44. Cet outil comprend aussi à une extrémité une première saillie 410 adaptée pour venir s'encliqueter dans un support d'outil (non représenté).

Le doigt 42 s'étend dans la direction B avec une partie sensiblement linéaire 422 de longueur suffisante pour retenir un bourrelet de pneumatique terminée par un crochet 421 de faible hauteur. La direction B est sensiblement perpendiculaire à l'axe A.

Le galet presseur 43 est fixé au doigt 42 par une seconde saillie de liaison sensiblement cylindrique 423. Le galet comprend un anneau élastique 432 disposé autour d'un roulement à billes 431. Le roulement à billes 431 est enfilé autour de la 2^{nde} saillie de liaison 423. Le galet presseur 43 est ainsi libre en rotation. L'axe de rotation du galet est l'axe A' parallèle à A. La hauteur axiale de l'anneau élastique 432 et ainsi celle du galet presseur est de l'ordre de 30 à 50 mm.

Une troisième saillie 411 est disposée à l'extrémité du support 40 opposée à la saillie de fixation 410. Autour de cette saillie est disposé un anneau élastique 44 destiné à servir de butée.

La zone de transmission d'effort C du galet presseur 43 est constituée par son extrémité dans la direction B opposée au support 41. Cette zone C se trouve à une distance D du support 41. D est supérieure à la distance séparant l'extrémité du crochet 421 du support 41.

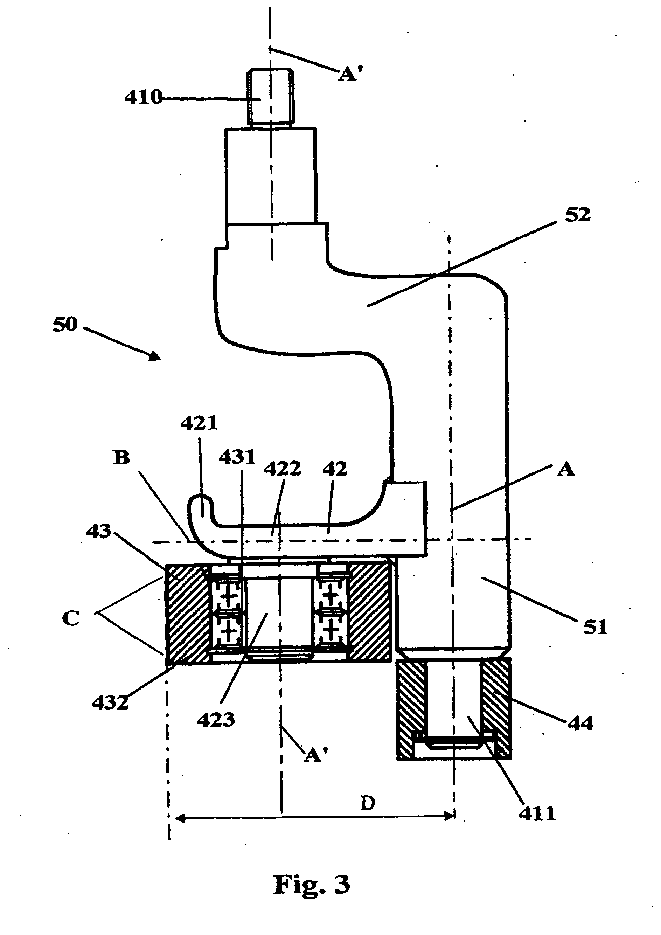

La figure 3 présente une variante 50 de l'outil de l'invention dans laquelle l'axe de la saillie de fixation est décalé relativement à l'axe A du support 51 dans la direction B jusqu'à être sensiblement coaxial avec l'axe A' du galet presseur 43. Cette distance peut atteindre D. Le support 51 comporte une partie 52 en forme de S. L'avantage de cette variante est de pouvoir être installée sur les machines de montage existantes sans diminuer la largeur maximale admissible des roues.

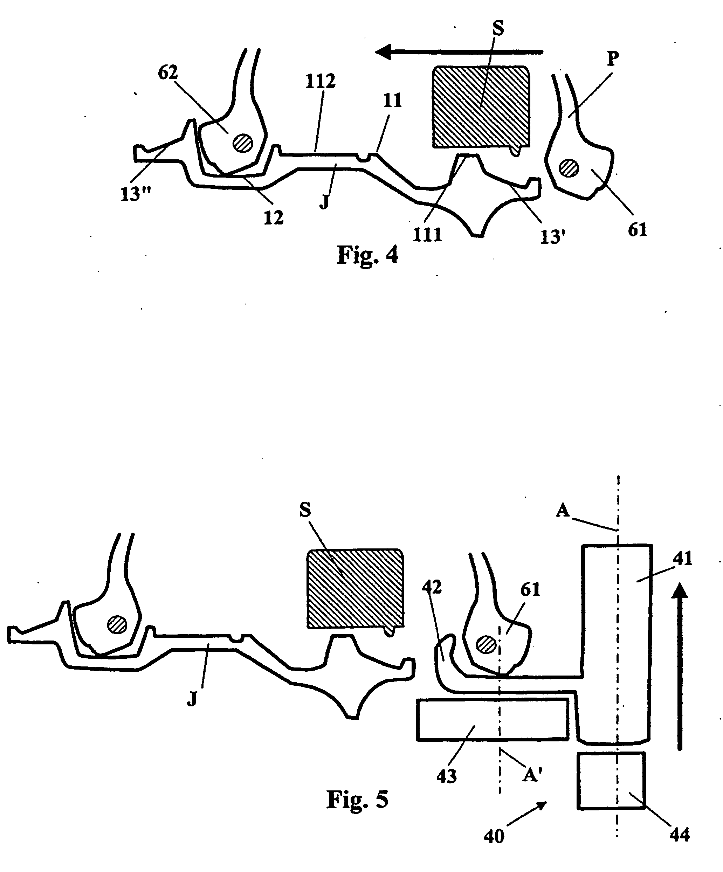

Les figures 4 à 13 illustrent schématiquement le procédé de montage selon l'invention dans le cas d'une jante similaire à celle de la figure 1 avec une gorge de montage. Ces figures illustrent les positions respectives de la jante J, de l'appui S et des bourrelets 61 et 62 du pneumatique P, la jante étant montée sur un axe rotatif horizontal. Les figures correspondent aux positions respectives dans un plan vertical passant par l'axe de rotation de la jante, au-dessus de cet axe.

La première étape est d'introduire l'appui S dans le pneumatique P. Cette introduction est décrite dans la demande FR 2 720 977 pages 3 et 4 et illustrée aux figures 1A, 1B et 1C de cette demande. L'introduction est faite après ovalisation de l'appui et/ou du pneumatique, ou après cloquage de l'appui.

Ensuite, on monte la roue sur un axe rotatif, ici horizontal, d'une machine de montage appropriée puis un opérateur introduit le second bourrelet 62 du pneumatique P ainsi que l'appui de soutien S sur la portée d'appui 11. Le pneumatique P et l'appui S se retrouvent alors dans la position illustrée à la figure 4 : le second bourrelet 62 est placé (au moins dans la zone illustrée) dans la gorge de montage 12, l'appui S est enfilé autour de la première portée d'appui 111, le premier bourrelet 61 reste complètement à l'extérieur de la jante J.

Comme illustré à la figure 5, on amène alors l'outil 40 sous le premier bourrelet 61 pour saisir ce premier bourrelet 61 avec le doigt 42 de l'outil 40.

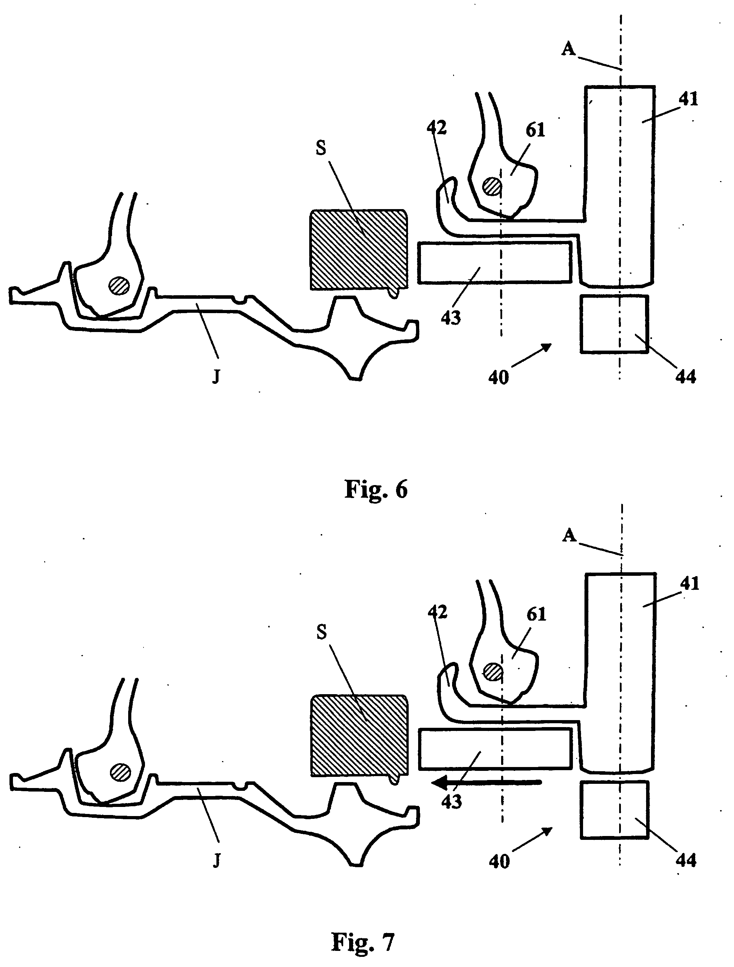

On déplace ensuite verticalement l'outil 40 jusqu'à ce que la partie radialement inférieure du galet 43 soit au-dessus de la portée d'appui 11. Cette position est illustrée à la figure 6.

Comme l'indique la flèche de la figure 7, on déplace axialement l'outil 40 pour venir appliquer le galet presseur 43 directement contre la face axialement postérieure de l'appui S tout en mettant en rotation la jante et par entraînement le pneumatique et l'appui. Cela permet d'enfiler progressivement l'appui de soutien S sur la portée 11.

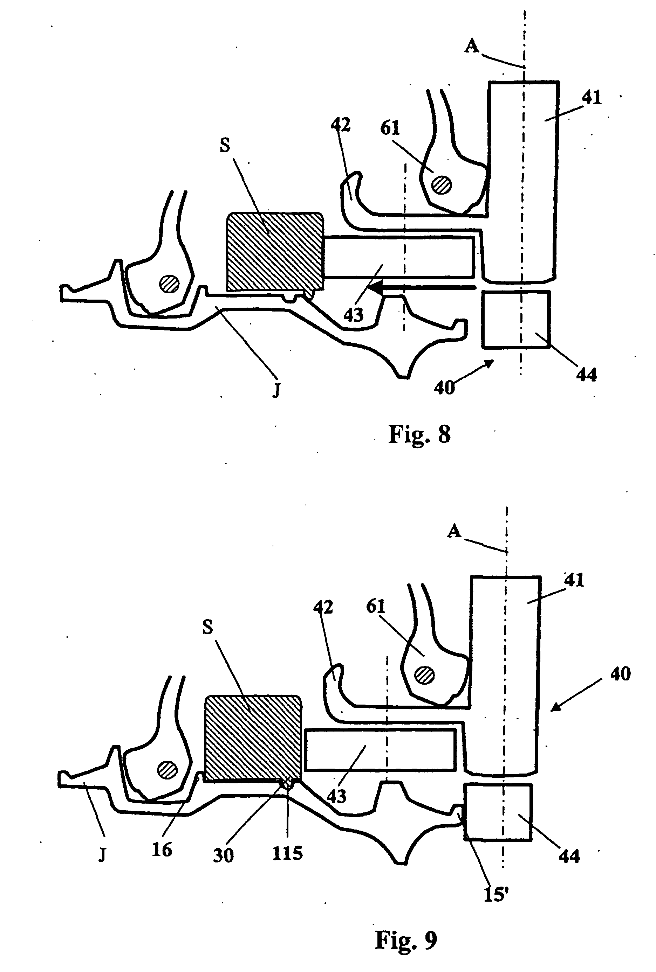

La figure 8 illustre une position intermédiaire de cet mise en place de l'appui. On peut noter que le bourrelet 61 peut librement se reculer sur le doigt 42 pendant cette mise en place ce qui diminue sensiblement les efforts de flexion imposés au sommet du pneumatique.

La figure 9 illustre la fin de l'enfilage de l'appui sur la portée 112. L'appui est en butée contre la saillie 16 et la saillie 30 de l'appui est encliquetée dans la rainure 115 de la portée 112. Dans cette position, la butée 44 de l'outil 40 est en appui contre la saillie 15'.

La position exacte de cette butée 44 relativement à la zone d'application des efforts C est déterminée en tenant compte des déformations de l'appui S pendant sa mise en place. On peut alors être certain que l'appui est en place correctement lorsque la butée 44 vient en contact avec la saillie 15'.

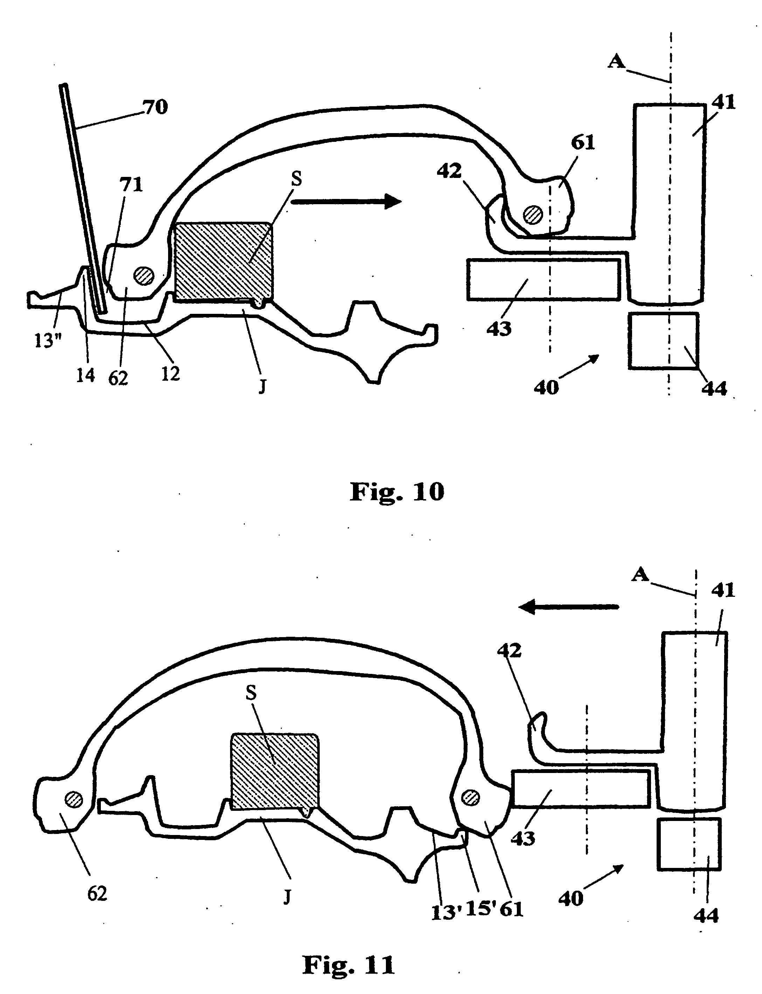

Après avoir achevé d'enfiler l'appui sur la portée 112, on effectue un recul axial de l'outil 40 jusqu'à exercer sur le second bourrelet une traction qui le soulève légèrement du fond de la gorge de montage 12 et dégage un espace libre 71 entre le bourrelet 62 et la paroi de la gorge de montage adjacente à la saillie 14 du second siège 13" (voir figure 10). On peut alors insérer un levier de montage 70 dans cet espace pour sortir le second bourrelet 62 de la gorge de montage 12 et le placer à l'extérieur du second siège 13" (voir figure 11).

Après avoir inséré le levier 70 et dégagé le bourrelet 62 de la gorge de montage 12, on libère le premier bourrelet 61 du doigt 42 et on met en place ce premier bourrelet 61 sur le premier siège 13' en le faisant progressivement passer au-dessus de la saillie 15' par une pression du galet 43 contre le premier bourrelet (voir figure 11) tout en faisant tourner la jante.

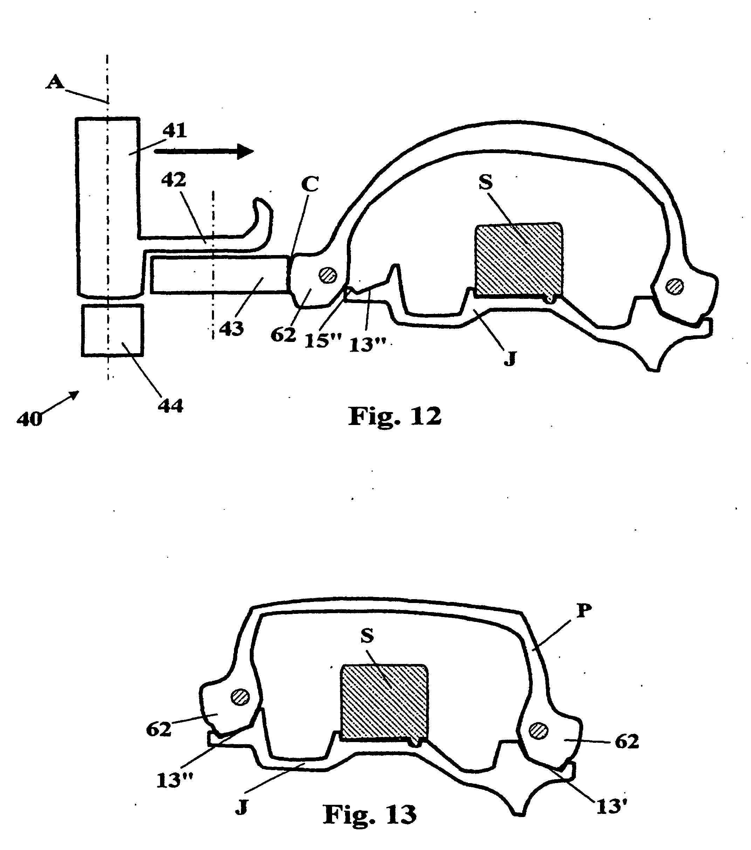

Après avoir achevé le montage du premier bourrelet, on déplace l'outil 44 et, de préférence, on le retourne de telle sorte de pouvoir monter le second bourrelet 62 sur son siège 13" en le faisant progressivement passer au-dessus de la saillie 15" au moyen d'une poussée du galet 43 tout en faisant tourner la jante (voir figure 12). Si on ne peut pas retourner l'outil 40, on peut aussi monter le second bourrelet par pression du galet 44, il est alors préférable de le munir d'un roulement à billes. Le pneumatique P et l'appui S sont alors complètement mis en place sur la jante J (figure 13).

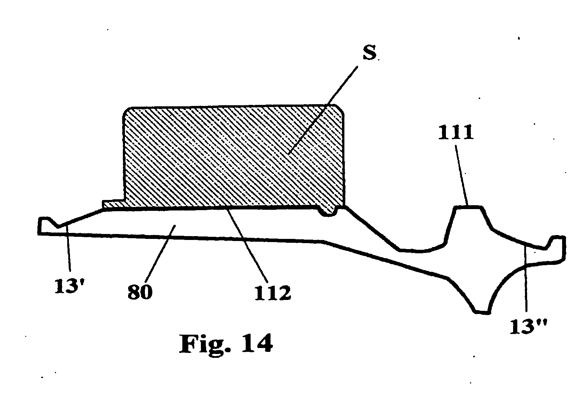

La figure 14 présente, vue en section méridienne, une jante monobloc 80 telle que divulguée à la figure 2 de la demande FR 99/10108. Cette jante 80 ne comporte pas de gorge de montage et la portée 112 est directement reliée à l'extrémité axialement intérieure du second siège de jante 13". Le procédé de montage et l'outil selon l'invention sont tout à fait applicables aussi au montage d'un appui de soutien S et d'un pneumatique P sur une telle jante. Lors de la mise en place de l'appui de soutien par pression du galet presseur 43, la paroi axialement antérieure de l'appui pousse le second bourrelet jusqu'à sa mise en place sur son siège 13".

## Revendications

1. Procédé de montage sur une jante monobloc J, comprenant un premier siège (13') de jante, incliné vers l'extérieur, prolongé axialement à l'extérieur par une saillie de faible hauteur (15') et réuni axialement à l'intérieur à une portée (11) destinée à recevoir un appui de soutien S de bande de roulement, et un second siège (13") de jante, incliné vers l'extérieur, dont l'extrémité axialement intérieure est sur un cercle de diamètre supérieur au diamètre du cercle sur lequel se trouve l'extrémité axialement intérieure du premier siège de jante, d'un pneumatique P comprenant un premier bourrelet (61) et un deuxième bourrelet (62) qui seront montés respectivement sur le premier (13') et le deuxième (13") sièges de jante et d'un appui de soutien S, amovible, dans lequel :
(a) on introduit, dans une première étape, ledit appui S dans le pneumatique P ;
(b) on présente sur la jante J le deuxième bourrelet (62) et l'appui S, du côté opposé au deuxième siège (13") de jante, jusqu'à les introduire sur ladite portée (11) ;
(c) on achève d'enfiler ledit appui S sur la portée (11) et on monte sur le premier siège (13') de jante le premier bourrelet (61) ; et
(d) on monte le deuxième bourrelet (62) sur le deuxième siège (13") de jante ;
**caractérisé en ce que**, avant d'achever d'enfiler ledit appui S sur la portée (11), on saisit ledit premier bourrelet (61) en un point donné et on déplace radialement extérieurement ledit point pour écarter radialement en ce point ledit premier bourrelet (61) dudit appui S, on poursuit la mise en place dudit appui S sur ladite portée (11) et après avoir achevé ladite mise en place dudit appui S, on libère ledit bourrelet (61).

2. Procédé de montage selon la revendication 1, dans lequel on achève d'enfiler ledit appui S par poussée directe axiale d'un outil d'application (40, 50) contre la paroi dudit appui S disposée du côté dudit premier bourrelet (61) tout en mettant la jante J en rotation autour de son axe de symétrie.

3. Procédé de montage selon la revendication 2, dans lequel on enfile l'appui S sur la portée de la jante J jusqu'au contact entre une butée (44) dudit outil d'application (40, 50) et la saillie extérieure (15') du premier siège (13') de la jante J.

4. Procédé de montage selon l'une des revendications 1 à 3, dans lequel, ladite jante ayant une gorge de montage (12) disposée entre le second siège (13") et la portée d'appui (11), et ledit second bourrelet (62) ayant été introduit lors de l'étape (b) dans ladite gorge de montage (12), après avoir achevé d'enfiler l'appui de soutien S sur la portée (11) de la jante et avant de libérer le premier bourrelet (61), on déplace axialement extérieurement ledit premier bourrelet (61) pour exercer sur le second bourrelet (62) une traction, créer un espace local (71) entre ledit second bourrelet (62) et la paroi adjacente au second siège (13") de la gorge de montage (12) et on introduit un levier de montage (70) dans cet espace local (71) entre ledit second bourrelet (62) et ladite paroi adjacente au second siège de la gorge de montage.

5. Outil (40, 50) de mise en place des bourrelets (61, 62) d'un pneumatique et d'un appui de soutien S sur une jante monobloc J **caractérisé en ce qu'**il comporte :
- un support (41, 51) de forme allongée d'axe A ;
- un doigt (42) s'étendant à partir du support (41, 51) dans une direction B perpendiculaire à A ; et
- un moyen (43) de transmission d'un effort d'application à partir du support (41, 51) à une zone C disposée relativement audit support (41, 51) dans la direction B au-delà du doigt (42), à une distance D de l'axe A et décalée relativement audit doigt parallèlement à l'axe A.

6. Outil (40, 50) selon la revendication 5, dans lequel le moyen (43) de transmission d'un effort d'application à partir du support est un patin.

7. Outil (40, 50) selon la revendication 5, dans lequel le moyen (43) de transmission d'un effort d'application à partir du support est un galet libre en rotation.

8. Outil (40, 50) selon la revendication 7, dans lequel le galet a un axe de rotation A' parallèle à l'axe A.

9. Outil (40, 50) selon l'une des revendications 7 et 8, dans lequel le galet (43) est fixé au doigt (42).

10. Outil (40, 50) selon l'une des revendications 5 à 9, comprenant en plus une butée (44) disposée dans la direction B relativement au support et décalée relativement audit doigt dans la direction A au-delà du moyen (43) de transmission d'un effort.

11. Outil (40, 50) selon la revendication 10, dans lequel ladite butée (44) est un galet libre en rotation d'axe de rotation coaxial ou parallèle à l'axe A.

12. Outil (50) selon l'une des revendications 5 à 11, comportant une saillie (410) de fixation à un support d'outil, dans lequel l'axe de ladite saillie est sensiblement parallèle à l'axe A et décalé dans la direction B d'une distance inférieure ou égale à D.

13. Outil (50) selon la revendication 12, dans lequel l'axe de ladite saillie de fixation est sensiblement coaxial avec l'axe A'.

## Patentansprüche

1. Verfahren zur Montage auf einer einteiligen Felge J, die einen ersten Felgensitz (13'), der nach außen geneigt ist, an den sich axial nach außen eine Erhöhung geringer Höhe (15') anschließt und der axial innen mit einer Auflagefläche (11) in Verbindung steht, die dafür vorgesehen ist, eine Stützauflage S für den Laufstreifen aufzunehmen, und einen zweiten Felgensitz (13") umfasst, der nach außen geneigt ist, dessen axial inneres Ende auf einem Kreis mit einem Durchmesser liegt, der größer ist als der Durchmesser des Kreises, auf dem sich das axial innere Ende des ersten Felgensitzes befindet, eines Luftreifens P, der einen ersten Wulst (61) und einen zweiten Wulst (62) umfasst, die auf dem ersten Felgensitz (13') bzw. dem zweiten Felgensitz (13") montiert werden, und einer Stützauflage S, die abnehmbar ist, das die folgenden Schritte umfasst:
(a) Einführen der Auflage S in den Luftreifen P in einem ersten Schritt;
(b) Aufbringen des zweiten Wulstes (62) und der Auflage S auf die Felge J auf der Seite, die dem zweiten Felgensitz (13") gegenüberliegt, bis sie auf die Auflagefläche (11) geschoben sind;
(c) Vollenden des Aufziehens der Auflage S auf die Auflagefläche (11) und Montieren des ersten Wulstes (61) auf dem ersten Felgensitz (13'); und
(d) Montieren des zweiten Wulstes (62) auf dem zweiten Felgensitz (13"),
**dadurch gekennzeichnet, dass** man, bevor das Aufziehen der Auflage S auf die Auflagefläche (11) vollendet wird, den ersten Wulst (61) an einem gegebenen Punkt greift und dass man diesen Punkt radial nach außen verschiebt, um an diesem Punkt radial einen Abstand zwischen dem ersten Wulst (61) und der Auflage S zu erzeugen, dass die Positionierung der Auflage S auf der Auflagefläche (11) fortgesetzt wird und dass nach Beendigung der Positionierung der Auflage S der Wulst (61) freigesetzt wird.

2. Montageverfahren nach Anspruch 1, wobei das Aufziehen der Auflage S durch unmittelbares axiales Pressen eines Werkzeuges (40, 50) gegen die Wand der Auflage S, die auf der Seite des ersten Wulstes (61) angeordnet ist, vollendet wird, wobei die Felge J gleichzeitig in Drehung um ihre Symmetrieachse versetzt wird.

3. Montageverfahren nach Anspruch 2, wobei die Auflage S bis zum Kontakt zwischen einem Anschlag (44) dieses Werkzeuges (40, 50) und der äußeren Erhöhung (15') des ersten Sitzes (13') der Felge J auf die Auflagefläche S der Felge J aufgezogen wird.

4. Montageverfahren nach einem der Ansprüche 1 bis 3, wobei die Felge eine Montagenut (12) aufweist, die zwischen dem zweiten Sitz (13") und der Auflagefläche (11) für die Stützauflage angeordnet ist, und wobei der zweite Wulst (62) während des Schrittes (b) in die Montagenut (12) eingeführt worden ist, nachdem die Stützauflage S vollständig auf die Auflagefläche (11) der Felge aufgezogen worden ist und bevor der erste Wulst (61) freigesetzt worden ist, bei dem der erste Wulst (61) axial nach außen verschoben wird, um auf den zweiten Wulst (62) eine Zugbeanspruchung auszuüben, um einen lokalen Zwischenraum (71) zwischen dem zweiten Wulst (62) und der dem zweiten Sitz (13") zugewandten Wand der Montagenut (12) zu erzeugen, und bei dem ein Montageheber (70) in diesen lokalen Zwischenraum (71) zwischen dem zweiten Wulst (62) und der dem zweiten Sitz zugewandten Wand der Montagenut eingeführt wird.

5. Werkzeug (40, 50) zum Anordnen der Wülste (61, 62) eines Luftreifens und einer Stützauflage S auf einer einteiligen Felge J,
**dadurch gekennzeichnet, dass** es umfasst:
- einen Träger (41, 51) mit länglichen Form in Richtung der Achse A;
- einen Finger (2), der sich vom Träger (41, 51) in eine Richtung B senkrecht zu A erstreckt; und
- ein Mittel (43) zum Übertragen einer einwirkenden Kraft von dem Träger (41, 51) auf einen Bereich C, der relativ zum Träger (41, 51) in der Richtung B jenseits des Fingers (42) in einem Abstand D von der Achse A angeordnet ist und relativ zu diesem Finger parallel zur Achse A verschoben ist.

6. Werkzeug (40, 50) nach Anspruch 5, wobei das Mittel (43) zum Übertragen einer von dem Träger her einwirkenden Kraft eine Kufe ist.

7. Werkzeug (40, 50) nach Anspruch 5, wobei das Mittel (43) zum Übertragen einer von dem Träger her einwirkenden Kraft eine frei drehbare Rolle ist.

8. Werkzeug (40, 50) nach Anspruch 7, wobei die Rolle eine Drehachse A' parallel zur Achse A aufweist.

9. Werkzeug (40, 50) nach einem der Ansprüche 7 und 8, wobei die Rolle (43) an dem Finger (42) befestigt ist.

10. Werkzeug (40, 50) nach einem der Ansprüche 5 bis 9, das außerdem einen Anschlag (44) umfasst, der in Richtung B relativ zum Träger angeordnet ist und relativ zum Finger in Richtung A jenseits des Mittels (43) zum Übertragen einer Kraft verschoben ist.

11. Werkzeug (40, 50) nach Anspruch 10, wobei der Anschlag (44) eine frei drehbare Rolle mit einer Drehachse koaxial oder parallel zur Achse A ist.

12. Werkzeug (50) nach einem der Ansprüche 5 bis 11, das ein hervorstehendes Teil (410) zur Befestigung an einem Werkzeugträger umfasst, wobei die Achse dieses hervorstehenden Teiles im wesentlichen parallel zur Achse A ist und in Richtung B um einen Abstand kleiner als oder gleich D verschoben ist.

13. Werkzeug (50) nach Anspruch 12, wobei die Achse dieses hervorstehenden Teiles zur Befestigung im wesentlichen koaxial mit der Achse A' ist.

## Claims

1. Method of mounting, on a single-piece rim J, comprising a first rim seat (13'), inclined outwards, extended axially outwards by a projection of low height (15') and joined axially inwards to a bearing surface (11) intended to receive a tread bearing support S, and a second rim seat (13"), inclined outwards, whose axially internal end is on a circle with a diameter greater than the diameter of the circle on which the axially internal end of the first rim seat is situated, a tyre P comprising a first bead (61) and a second bead (62) which will be mounted respectively on the first (13') and second (13") rim seats, and a removable bearing support S, in which:
(a) the said support S is introduced, in a first step, into the tyre P;
(b) the second bead (62) and the support S are presented on the rim J, on the side opposite to the second rim seat (13"), until they are introduced on the said bearing surface (11);
(c) the process of fitting the said support S on the bearing surface (11) is completed and the first bead (61) is mounted on the first rim seat (13'); and
(d) the second bead (62) is mounted on the second rim seat (13");
**characterised in that**, before finishing fitting the said support S on the bearing surface (11), the said first bead (61) is gripped at a given point and the said point is moved radially externally in order to move the said first bead (61) away from the said support S radially at this point, the fitting of the said support S on the said bearing surface (11) is continued and, after having completed the said fitting of the said support S, the said bead (61) is released.

2. Mounting method according to Claim 1, in which the process of fitting the said support S is completed by direct axial pushing of an application tool (40, 50) against the wall of the said support S disposed on the side of the said first bead (61) whilst rotating the rim J about its axis of symmetry.

3. Mounting method according to Claim 2, in which the support S is fitted on the bearing surface of the rim J until there is contact between a stop (44) on the said application tool (40, 50) and the external projection (15') on the first seat (13') of the rim J.

4. Mounting method according to one of Claims 1 to 3, in which, the said rim having a mounting groove (12) disposed between the second seat (13") and the support bearing surface (11), and the said second bead (62) having been introduced during step (b) into this mounting groove (12), after having finished fitting the bearing support S on the rim bearing surface (11) and before releasing the first bead (61), said first bead (61) is moved axially externally in order to exert a traction on the second bead (62), to create a local space (71) between the second bead (62) and the wall adjacent to the second seat (13") of the mounting groove (12), and a mounting lever (70) is introduced into this local space (71) left between the second bead (62) and the said wall adjacent to the second seat of the mounting groove.

5. Tool (40, 50) for fitting tyre beads (61, 62) and a bearing support S on a single-piece rim J, **characterised in that** it has:
- an elongate-shaped support (41,51) of axis A;
- a finger (42) extending from the support (41, 51) in a direction B perpendicular to A; and
- a means (43) of transmitting an application force from the support (41, 51) to a zone C disposed relative to the said support (41, 51) in the direction B beyond the finger (42) at a distance D from the axis A and offset relative to the said finger parallel to the axis A.

6. Tool (40, 50) according to Claim 5, in which the means (43) of transmitting an application force from the support is a shoe.

7. Tool (40, 50) according to Claim 5, in which the means (43) of transmitting an application force from the support is a roller free to rotate.

8. Tool (40, 50) according to Claim 7, in which the roller has an axis of rotation A' parallel to the axis A.

9. Tool (40, 50) according to one of Claims 7 and 8, in which the roller (43) is fixed to the finger (42).

10. Tool (40, 50) according to one of Claims 5 to 9, comprising in addition a stop (44) disposed in the direction B relative to the support and offset relative to the said finger in the direction A beyond the force transmission means (43).

11. Tool (40, 50) according to Claim 10, in which the said stop (44) is a roller free to rotate with an axis of rotation coaxial with or parallel to the axis A.

12. Tool (50) according to one of Claims 5 to 11, having a projection (410) for fixing to a tool support, in which the axis of the said projection is substantially parallel to the axis A and offset in the direction B by a distance less than or equal to D.

13. Tool (50) according to Claim 12, in which the axis of the said fixing projection is substantially coaxial with the axis A'.
